Europäisches Patentamt

**European Patent Office**

Office européen des brevets

(19)

(11) Numéro de publication : **0 011 009**
**B1**

(12) FASCICULE DE BREVET EUROPÉEN

(45) Date de publication du fascicule du brevet :
**19.05.82**

(51) Int. Cl.³ : **B 60 N   1/06**

(21) Numéro de dépôt : **79400743.5**

(22) Date de dépôt : **12.10.79**

(54) **Appui-tête pour siège de véhicule.**

(30) Priorité : **31.10.78 FR 7830945**
**04.05.79 FR 7911328**

(43) Date de publication de la demande :
**14.05.80 (Bulletin 80/10)**

(45) Mention de la délivrance du brevet :
**19.05.82 Bulletin 82/20**

(84) Etats contractants désignés :
**BE DE GB IT NL**

(56) Documents cités :
**FR - A - 2 377 898**
**GB - A - 2 008 937**
**US - A - 1 471 168**
**US - A - 2 973 029**

(73) Titulaire : **Etablissements TREVES**
**109 rue du Faubourg Saint-Honoré**
**F-75008 Paris (FR)**

(72) Inventeur : **Fermigier, Claude**
**5 Rue de l'Université**
**F-75007 Paris (FR)**

(74) Mandataire : **Hagel, Francis et al**
**Cabinet Robert Bloch 39, avenue de Friedland**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Appui-tête pour siège de véhicule

La présente invention concerne les appuis-tête pour siège de véhicule, du type comprenant une armature rigide en U dont les extrémités des branches sont destinées à être fixées au dossier du siège, un élément de renfort rigide évidé engagé sur ladite armature, un rembourrage porté par l'élément de renfort et des moyens pour empêcher l'élément de renfort de se déplacer parallèlement aux branches de l'armature.

Un appui-tête de ce type est décrit dans la demande de certificat d'addition français n° 2 377 898. Dans ce dispositif connu, il est possible de modifier la position dans le sens longitudinal (par rapport au véhicule), car l'armature est fixée au siège par un tube dont on peut faire varier la position angulaire, et elle peut donc pivoter autour de ce tube. Toutefois, ce tube est fixé par des vis qui doivent être desserrées puis bloquées à nouveau lorsqu'on souhaite modifier le réglage. De plus, le blocage angulaire du tube résulte d'un simple contact entre surfaces cylindriques, ce qui risque d'être insuffisant en cas de choc pour maintenir l'appui-tête.

L'invention vise un appui-tête ne présentant pas les inconvénients du dispositif connu, c'est-à-dire dans lequel le réglage de la position dans le sens longitudinal s'effectue de façon très simple et commode, et qui conserve sa position même en cas de choc.

L'invention a pour objet un appui-tête du type précité, caractérisé par le fait qu'il comprend une pièce formant écrou, solidaire de l'armature dans une direction sensiblement perpendiculaire au plan de l'armature, une vis en prise avec ladite pièce, montée selon ladite direction entre les parois de l'élément de renfort, et une molette de manœuvre reliée à la vis et faisant saillie à l'extérieur de l'élément de renfort.

L'utilisation d'un système vis-écrou permet un réglage extrêmement simple puisqu'il suffit de tourner le bouton de manœuvre pour obtenir la position désirée. En outre, un tel système fixe la position d'une façon parfaitement stable vis-à-vis des chocs.

Dans une forme de réalisation préférée, la molette est montée sur un côté de l'appui-tête et est reliée fonctionnellement à la vis par une transmission à lien flexible, et un renvoi est prévu pour chaque brin dudit lien.

Cette réalisation est avantageuse en ce que la molette, étant placée sur le côté, est facile à manœuvrer par l'usager et le réglage est ainsi facilité pour l'usager assis sur son siège.

L'invention sera bien comprise à la lecture de la description suivante, faite en se référant au dessin annexé, dans lequel :

La figure 1 est une vue de dessous d'un appui-tête selon l'invention ;

La figure 2 est une vue en perspective avec arrachement de l'appui-tête de la figure 1, le rembourrage étant omis ;

La figure 3 montre en vue de dessous une variante de réalisation.

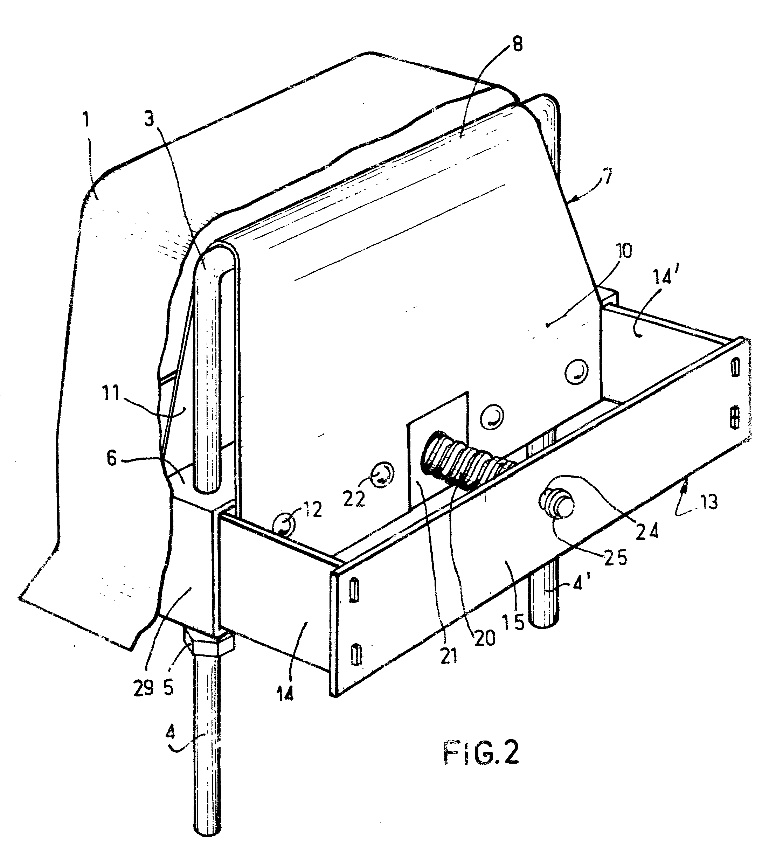

L'appui-tête représenté au dessin comprend un renfort rigide, par exemple en polypropylène, 1 autour duquel est monté un rembourrage 2, qu'on a omis à la figure 2.

Le renfort 1 a une forme de cloche et entoure une armature métallique 3 en forme de U. L'armature 3 se fixe par les extrémités de ses branches 4, 4' sur la partie supérieure du dossier d'un siège de véhicule, non représenté, le mode de fixation étant quelconque pourvu qu'il assure une liaison rigide.

Les branches 4, 4' traversent des douilles de serrage 5, 5' en matière plastique, par exemple en nylon, montées dans des paliers 6, 6'. L'ajustage des douilles 5, 5' sur les branches 4, 4' est tel qu'un effort est nécessaire pour faire coulisser les douilles sur les branches de l'armature.

Un capot 7 en tôle, en forme de U, est monté autour de l'armature 3. Sur les parois 10, 11 du capot sont fixés les paliers 6, 6', par exemple par des vis ou des rivets 12.

Un cadre rectangulaire 13 formé de quatre parois 13 formé de quatre parois 14, 14', 15, 16 est fixé sur la partie inférieure des parois 17, 18 du renfort 1 par les parois 15, 16 au moyen par exemple de vis 19. Une vis 20, avantageusement à filet double, est montée libre en rotation entre les parois 15, 16 du cadre 13. Elle est en prise avec un écrou 21 constitué par un bloc en matière plastique rigide monté centralement entre les parois 10, 11 du capot 7 et fixé à ces parois par exemple par des rivets 22. L'écrou 21 est bien entendu traversé par un trou, non représenté, muni d'un filetage correspondant à celui de la vis 20.

Les parois 15 et 17 sont munies d'un trou 23 pour le passage d'un tourillon 24 prolongeant la vis 20, et une rondelle de retenue 25 est montée à l'extérieur desdites parois dans une gorge formée dans le tourillon 24.

A l'extrémité opposée, la vis porte une molette de manœuvre 26 et se prolonge au-delà par un tourillon 27 traversant un trou 28 formé dans les parois 16 et 18.

D'autre part, les parois 14, 14' sont écartées des parois correspondantes du renfort 1 et les paliers 6,6' se prolongent par des parois respectives 29, 29' qui passent entre les parois 14 (resp. 14') et les parois de renfort 1. Cet agencement assure un excellent guidage pour le déplacement du cadre 13 par rapport à l'armature 3.

Il faut également noter que la molette 26 fait saillie vers le bas par rapport au plan de base du renfort 1, et est de ce fait accessible à l'usager.

Il est clair, à la lumière de la description précédente, qu'en faisant tourner la molette 26, on déplacera l'appui-tête dans la direction longitudinale du véhicule, l'armature 3 et donc l'écrou 21 étant fixés au siège.

La combinaison de ce réglage avec le réglage en hauteur autorisé par le coulissement des douilles 5, 5' sur les branches de l'armature permet de donner à l'appui-tête toutes les positions qui peuvent être souhaitées en pratique et l'usager bénéficie ainsi d'un confort optimal quelles que soient sa taille et la dimension du siège.

Il est également évident que le réglage résultant de la position de la vis par rapport à l'écrou ne peut être modifié par un choc, sous réserve que la vis 20 soit non réversible.

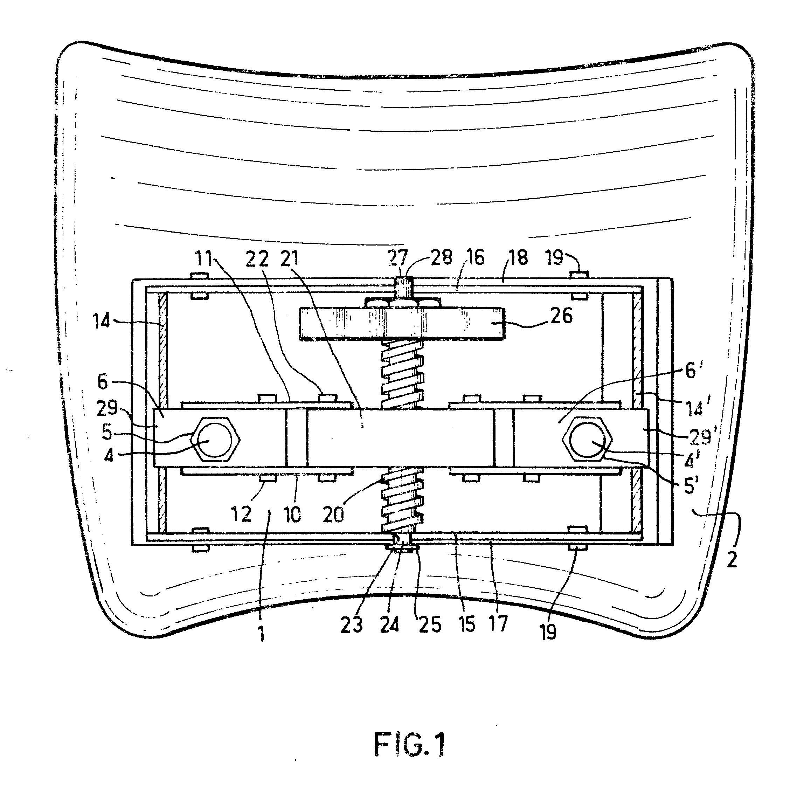

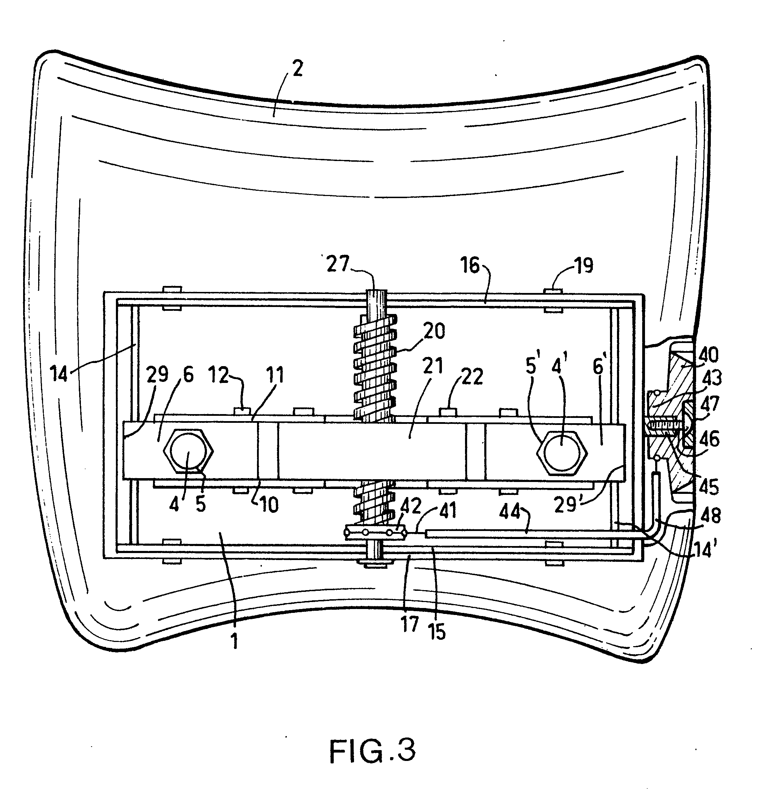

La figure 3 montre une variante de réalisation qui diffère de la réalisation des figures 1 et 2 par la disposition de la molette de manœuvre et le mode de commande de la vis.

Pour le reste, les éléments identiques portent les mêmes chiffres de référence et on ne reprendra pas à leur sujet la description précédente.

La vis 20 est commandée en rotation à partir d'une molette de manœuvre 40 placée sur le côté de l'appui-tête et donc facilement accessible à l'usager. La liaison est obtenue au moyen d'une chaîne 41, du type chaîne chapelet, en prise, d'une part, avec une poulie à gorges correspondante 42 solidaire de la vis 20 et, d'autre part, avec une poulie 43 du même type formée d'une seule pièce avec la molette 40. Chacun des brins de la chaîne 41 est guidé à l'intérieur d'un tube 44 coudé en 48 de façon à permettre le changement de direction du brin correspondant, et qui joue ainsi le rôle d'un renvoi. Les tubes 44 traversent la paroi latérale du renfort rigide 1 et l'un au moins des tubes traverse la paroi 14' du Cadre 13. Ces tubes peuvent être réalisés en matière plastique.

La molette 40 est montée rotative sur un tourillon 45 fixé au renfort 1, et elle est maintenue axialement par une vis 46 vissée dans un taraudage du tourillon 45. Un obturateur 47 masque la tête de la vis.

Il est clair ainsi qu'en faisant tourner la molette 40, on déplacera l'appui-tête dans la direction longitudinale du véhicule, l'armature 3 et donc l'écrou 21 étant fixés au siège.

Sur le dessin, les poulies 42 et 43 ont été représentées comme de même diamètre, mais on peut bien entendu donner un plus grand diamètre à la poulie 43. On obtiendra ainsi un déplacement plus important de l'appui-tête pour une rotation donnée de la molette 40.

## Revendications

1. Appui-tête pour siège de véhicule, du type comprenant une armature (3) rigide en Ü dont les extrémités des branches sont destinées à être fixées au dossier du siège, un élément (1) de renfort rigide évidé engagé sur ladite armature, un rembourrage porté par l'élément de renfort, et des moyens (5, 5') pour empêcher l'élément de renfort (1) de se déplacer parallèlement aux branches (3) de l'armature, caractérisé par le fait qu'il comprend une pièce formant écrou (21), solidaire de l'armature dans une direction sensiblement perpendiculaire au plan de l'armature, une vis (20) en prise avec ladite pièce (21), montée selon ladite direction entre les parois (15, 16) de l'élément de renfort, et une molette de manœuvre (26, 40) reliée à la vis (20) et faisant saillie à l'extérieur de l'élément de renfort.

2. Appui-tête selon la revendication 1, dans lequel un cadre (13) rectangulaire est fixé à l'intérieur de l'élément de renfort par ses parois (15, 16) parallèles au plan de l'armature, tandis que ses parois (14, 14') parallèles à l'axe de la vis (20) coulissent dans deux paliers (6, 6') servant également au coulissement des branches de l'armature.

3. Appui-tête selon la revendication 2, dans lequel la pièce formant écrou (21) est solidaire des deux paliers (6, 6') de coulissement.

4. Appui-tête selon l'une des revendications 1 à 3, dans lequel la molette (40) est montée sur un côté de l'appui-tête et est reliée fonctionnellement à la vis (20) par une transmission (41) à lien flexible, et un renvoi est prévu pour chaque brin dudit lien.

5. Appui-tête selon la revendication 4, dans lequel chaque brin est guidé à l'intérieur d'un tube (44) coudé traversant l'élément de renfort rigide.

6. Appui-tête selon la revendication 5, dans lequel le lien flexible est constitué par une chaîne-chapelet (41) en prise avec des poulies à gorges (42, 43) respectivement solidaires de la vis (20) et de la mollette (40).

## Claims

1. Head rest for vehicle seat, of the type comprising a rigid U-shaped frame (3) of which the ends of the arms are adapted to be fixed to the back of the seat, a hollow rigid reinforcing element (1) engaged on said frame, a padding carried by the reinforcing element, and means (5, 5') for preventing the reinforcing element (1) from moving parallel to the arms (3) of the frame, characterised in that it comprises a piece forming nut (21), fast with the frame in a direction substantially perpendicular to the plane of the frame, a nut (20) in mesh with said piece (21), mounted in said direction between the walls (15, 16) of the reinforcing element, and a manoeuvring wheel (26, 40) connected to the screw (20) and projecting outside the reinforcing element.

2. Head rest according to Claim 1, in which a rectangular frame (13) is fixed inside the reinforcing element by its walls (15, 16) parallel to the plane of the U-frame, whilst its walls (14, 14') parallel to the axis of the screw (20) slide in two bearings (6, 6') also serving for the slide of the arms of the U-frame.

3. Head rest according to Claim 2, in which the piece forming nut (21) is fast with the two bearings (6, 6') for slide.

4. Head rest according to one of Claims 1 to 3, in which the wheel (40) is mounted on one side of the head rest and is functionally connected to the screw (20) by a transmission (41) with flexible tie, and a guide is provided for each end of said tie.

5. Head rest according to Claim 4, in which each end is guided inside a bent tube (44) passing through the rigid reinforcing element.

6. Head rest according to Claim 5, in which the flexible tie is constituted by a chain (41) in mesh with grooved pulleys (42, 43) respectively fast with the screw (20) and with the wheel (40).

**Ansprüche**

1. Kopfstütze für Fahrzeugsitze, mit einem U-förmigen starren Bügel (3), dessen Schenkelenden an der Rückenlehne des Fahrzeugsitzes befestigbar sind, einem starren, hohlen und über den Bügel geschobenen Versteifungskörper (1), der eine Polsterung trägt, und mit Klemmhülsen (5, 5'), die dazu dienen, eine Bewegung des Versteifungskörpers (1) parallel entlang der Schenkel des Bügels (3) zu hemmen, dadurch gekennzeichnet, daß sie einen eine Mutter (21) bildenden Körper, der mit dem Bügel (3) in einer Richtung kraftschlüssig in Verbindung steht, die im wesentlichen senkrecht zur Bügelebene liegt, eine mit der Mutter (21) im Eingriff stehende Schraubenspindel (20), die sich in der genannten Richtung zwischen Seitenwänden (15, 16) des Versteifungskörpers erstreckt, und ein Verstellrad (26 bzw. 40) umfaßt, das mit der Schraubenspindel (20) verbunden ist und von der Außenseite des Versteifungskörpers her zugänglich ist.

2. Kopfstütze nach Anspruch 1, dadurch gekennzeichnet, daß innerhalb des Versteifungselementes ein Rechteckrahmen (13) mit seinen Seitenwänden (15, 16), die parallel zur Bügelebene liegen, befestigt ist, während die parallel zur Achse der Schraubenspindel (20) liegenden Seitenwände (14, 14') des Rechteckrahmens gleitend in zwei Lagerkörpern (6, 6') geführt sind, die ihrerseits gleitend entlang der Schenkel des Bügels geführt sind.

3. Kopfstütze nach Anspruch 2, dadurch gekennzeichnet, daß der die Mutter (21) umfassende Körper mit den beiden, die Gleitführung bildenden Lagerkörpern (6, 6') verbunden ist.

4. Kopfstütze nach einem der Ansprüche 1 bis 3, dadurch gekennzeichnet, daß das Verstellrad (40) an einer Seite der Kopfstütze angebracht und mit der Schraubenspindel (20) über ein bewegliches Kraftübertragungselement (41) funktionell verbunden ist, und daß für jedes Trum des Kraftübertragungselementes eine Umlenkung vorgesehen ist.

5. Kopfstütze nach Anspruch 4, dadurch gekennzeichnet, daß jedes Trum im Inneren eines gebogenen Rohres (44) geführt ist, das durch den Versteifungskörper hindurchgeführt ist.

6. Kopfstütze nach Anspruch 5, dadurch gekennzeichnet, daß das flexible Kraftübertragungselement aus einer Deckelkette (41) besteht, die mit Nutrollen (42, 43) im Eingriff ist, die einerseits an der Schraubenspindel (20) und andererseits an dem Verstellrad (40) befestigt sind.

FIG.1

FIG.2

FIG.3